# EUROPEAN PATENT APPLICATION

(11) **EP 3 168 120 A1**
(43) Date of publication of application: **17.05.2017**
(21) Application number: 15819256.7
(22) Date of filing: 27.03.2015
(51) Int. Cl.: B62K 19/18, F16B 7/00

(54) **OPTIMIZED CONNECTION STRUCTURE FOR METAL PIPE FITTING AND IMPLEMENTING METHOD THEREOF**

(30) Priority: 09.07.2014 CN 201410326556
(71) Applicant: Huang, Qida, Shengzhen, Guangdong 518001 (CN)
(72) Inventor: Huang, Qida, Shengzhen, Guangdong 518001 (CN)
(74) Representative: ZHAOffice SPRL
(86) International application number: PCT/CN2015/075212
(87) International publication number: WO 2016/004776

(57) **Abstract**

An optimized connection structure for a metal pipe fitting and an implementing method thereof. The structure includes: pipe fittings (1), multifunctional plugs (2, 20) arranged in the inner holes of the tail ends of the pipe fittings (1), and a connecting member (3) connecting the pipe fittings (1). The pipe fittings (1) are provided with radial through holes (13) about the periphery of the connecting part. The multifunctional plugs (2, 20) include: a plugging body (21) at the tail end, a groove (23) in the middle, and a large and a small positioning steps (22, 24) at the top end, the positioning steps being connected with each other. The connecting member (3) may be of a cast/forged composite structure, wherein an inner layer and an outer layer of metal rings (42, 41) and a plurality of radial and axial metal posts (43, 44) connected therewith are formed in a casting/forging mold, and forge-welded parts of the pipe fittings (1) and of the plugs (2, 20) subjected to casting/forging are three dimensionally fit together and forged into an integral structure, thus allowing the various pipe fittings (1) of a bicycle frame and of the fork thereof to be connected in a strong but pliable manner.

## Description

### Field of invention

The invention is in the field of metal tubular connection technology, which is about a connection structure with high strength and toughness used in various frame tubes and implementation method thereof.

### Background of the invention

In recent lightweight motor or non-motor vehicle manufacturing industry, tubes made of light metal with hollow and thin wall are welded to form frame or relative products to achieve light weight thus to pursue energy saving and emission reduction. The advantage of this connection is that only simple equipment and less investment are needed so that the product type could be quickly updated. However it substantially compromises connection strength and toughness which brings in safety risk. It is because the weld bead is in casting coarse grain structure which breaks original tough forging fine grain structure in seamless tubes. The welded joint is prone to bring in slag, shrinkage cavity, cracks and is with small surface area. Moreover, only same material could be welded together thus the superior performance achieved by using two different materials in one frame could not be obtained. It reveals the disadvantages of welded tubes in frames or front forks that are made of aluminum, magnesium, titanium and steel in the manufactural industry. In order to solve the above problem, the worlds' related manufacturers did many experiments and researches, planning to replace weld in recent decades.

One of the invention among existing technologies as CN86106439, published on Apr 08, 1987, disclosed a frame joint structure for bicycle and the like includes stub insert consisting of a base, a stub protruding from the base, and an annular shoulder at the junction between the base and the stub; a connecting member having a tubular end with an annular end face telescoping over the stub in a press fit; adhesive bonding the tubular end to the stub; and an annular collet positioned on the stub between the end face and the shoulder, including an inner end having a first lip portion which extends about and overlaps a periphery of the base adjacent to the shoulder and an outer end having a second lip portion which is beveled in a concave fashion to overlap and receive the end face of the connecting member. This approach used short lugs, connecting parts, bonding and annular jacket on every joint on bicycle frame. Each joint will need multiple parts. Joint strength of front fork could be improved comparing to merely welded joint and problem that two different materials could not be welded in one frame is solved. However as the structure needs considerable parts which leads to higher cost, degraded appearance and more weight, it is too complicated to be adopted in manufacturing, not to speak of unsolved connection problem between seat stay and chain stay.

The invention CN86101907, published on Dec 17, 1986, discloses technology of bicycle frame and bicycle. The invention includes a saddle stem and a head interconnected by top tube and down tube, and cast in a lightweight metal or alloy, particularly magnesium. At least the down tube or better the seat tube is cast in an open section which is subsequently closed by means of a second casting secured in the open section by adhesive and preferably also mechanically interlocked there with. The mechanical interlocking is provided by inter-engaging elements arranged at an angle oblique to the length of the castings. Top tube and down tube are joined by a structural bridge linking them at a location between head and saddle stem. Down tube joints the saddle stem at an intermediate point. All of the top tubes, down tubes, saddle stems and head tubes of the bicycle frame are cast to 1-piece, made of magnesium. There is a big C-shape open section cast on down tube and seat tube. The open section then is closed by adhesive bonding with a cover cast with small C-shape. The other parts of the frame, including the pair of seat stays and chain stays, seat stay bridge and head tube, are all made of magnesium. They are casted and interconnected by bonding to 1-piece with the aid of mechanical connection to finally form the frame. Metal wall thickness of each frame part is 5mm. The advantage of this type of bicycle frame structure by cast and bonding is that it has relatively big metal surface area and also improves torsion strength, bending performance and rigidity. Its drawbacks include considerable investment on mold, aging of bonder and hardness to balance bead between various casting parts. The method is hard to adapt to rapid changing request on size and pattern in frame market.

### BRIEF DESCRIPTION OF THE INVENTION

The following invention intends to solve the problems of slag, shrinkage cavity, cracks, less strong and tough connection parts and small surface area in existing metal tube weld technologies forming metal tubes and brings out an optimized connection structure for metal tube connection and the implementation method thereof. Radical through holes are positioned around a tube end while a multi-functional insert is stuffed into the tube end; firstly one tube or multiple tubes stuffed with inserts as inlaid parts are pre-positioned on corresponding location of the forging and casting die; the molds are secured together and then closed; with PLC control of casting and forging combo-machine, during molding filling with liquid lamellar flowing to connection cavity, molten metal injected into the connection cavity could flow to the groove in the insert through radical through holes in the tube and axial through holes of the insert; after press forging, the inner and outer metal rings cover the tubes and the multi-functional insert and formed into a single, three dimensional structure with high toughness and strength. As the tubular connection of a bicycle frame and its front fork is more difficult and complex and requires more toughness and strength than other light vehicles, the main emphasis preferably of the invention is to solve the problem on tubular connection to achieve high toughness and strength.

The invention provides below technical solution to solve above problem:

The invention involves an optimized connection structure of metal tubes, wherein the structure comprising: tubes, a multi-functional insert positioned in the inner end of a tube and a tube connector.

One of the said tubes contains radical through holes around the joint part and the center lines of the through holes are parallel to the tube's transverse section.

The said multi-functional insert comprising: a block positioned at the end, a groove or a through hole in the middle and small and big shoulders at the top, wherein the big shoulder comprising: an axial hole or a through channel located at the external surface which connects the said groove or through hole, and a circular surface intersects with the inner side of the tube connector.

The said tube connector comprising: an inner metal ring, an outer metal ring, and several radical and axial metal bars connecting the rings which cover the said tubes and the multi-functional insert and formed into a single, three dimensional structure with high toughness and strength during the forging process.

The said tube is but does not limit to a top tube, a down tube, a seat tube, two seat stays, two chain stays, a front fork or a stem.

The said tube connector is positioned at the end of the connection part of the said seat tube which connects the top tube and two seat stays with the seat tube, and the said connection part comprising: an inner hole and a through hole, which are locally counterbored along axial direction and diameter direction in order to fit the top tube and the seat stays during the seat tube forming process.

The said multi-functional insert is a 2 port insert for top tube, a 2 port insert for down tube, an insert for seat tube, an insert for seat stays, an insert for chain stays, a double-insert for dropout, a double-insert for fork crown or an insert for front dropout, and the said multi-functional insert is preferably of circular, flat or irregular structures wherein the small shoulder at the top and the block positioned at the end of the insert are of the same transverse shape and dimension, which could sliding fit within the inner side of the said tube.

The said insert with flat structure of which the radical section thickness of the middle and top of the insert are less than that of the block at the insert end.

The said double-insert for dropout is preferably of an integrated structure, with the insert is circular or flat.

The said double-insert for fork crown is preferably of an integrated structure, with the insert is circular, flat or irregular, and a circular groove is positioned on the said double-insert to fix the stem, and a through hole is positioned on the said double-insert connecting the insert groove of stem and the crown lug.

Preferably, the said optimized connection structure comprises a head tube, a seat tube lug, a bottom bracket, a dropout lug, a front dropout lug and a crown lug.

The said tube connector is formed by die forging and die casting, and the said tubes and the said multi-functional insert inside tubes, as inlaid parts, help secure and form connection parts to achieve connection with high strength by being pre-positioned in corresponding location in the forging and casting die.

Preferably, the said optimized connection structure comprises: a seat tube, a seat stay, a chain stay and a head tube which connects the top tube and the down tube, a seat tube lug connecting the seat tube, the top tube and the seat stay, a bottom bracket connecting the seat tube, the down tube and the chain stay, a double-insert for dropout connecting the seat stay and the chain stay and the dropout connector.

Preferably, the said optimized connection structure comprises a fork stem, a front fork, an insert for front dropout, a crown lug connecting the stem and the front fork, a front dropout lug and a double-insert for crown connecting the front fork and an insert for front dropout.

The invention innovatively divides traditional welded frame and front fork parts into three types: the first type is tubular part that most tubes remain as traditional welded parts while only the head tube and the bracket are modified to connectors; the second type is a newly added multi-functional insert in inner side of each tube end; the third type is a connector connecting one or more tubes at the joint part in order to replace weld bead in weld procedure; other than changing the head tube and bracket into connectors, a seat tube lug connector at the end of seat tube and two dropout lug connectors at the connection part of the dropout are added; likewise a crown lug connector at the front crown and two front dropout lug connectors at the front dropout are added; each metal connector could be casted and forged one by one using casting-forging combo machine by coordinating the PLC controlling, holding temperature of stock oven, casting and forging mold and heating and cooling system; besides, metal connectors could be formed using forging equipment and procedure with Semi-Solid Metal Forming Processes (SSM or SSP).

The invention involving the said optimized implementing method of connecting metal tube wherein comprises:
1) Machining end face, through hole or through groove of metal or nonmetal tubes.
2) CNC machining multi-functional insert.
3) Chamfering, chip removing, dressing and drying the tubes and the multi-functional insert.
4) Performing surface treatment of micro-arc oxidation insulation when two different metal materials are connected.
5) Stuffing the multi-functional insert that matches with the tube into joint end of the tube.
6) Putting one or multiple tubes stuffed with multi-functional insert on the corresponding location of bottom die in the casting and forging combo-machine, securing together and closing the molds together by coordinating the PLC controlling, holding temperature of stock oven and mold heating and cooling system, then injecting molding filling with liquid lamellar flowing into the mold to fill the cavity inside the connector, the tubes and the multi-functional insert, and the combo-machine automatically controlled by PLC performing press forging which and keeps the force till it finally forms the connection parts after the temperature of the metal is cooled to semi-solid temperature, when one connection part forms an inner metal ring and an outer metal ring which are connected by numerous small radical or axial metal bars, and the rings and bars together with the forged and casted tubes and the multi-functional insert are finally forged and formed into one single, three dimensional structures with high toughness and strength.

So far the main connecting method completes; the remaining auxiliary operations could further be performed by person skilled in the relevant field of technology with existing technologies.

The connection part of a bicycle frame and its front fork in the invention is mechanical connection connecting parts made of two different materials; consequently new types of frames and front forks with marketing value could be created with both safety and comfort, provided that all connectors, tubes, inserts and dropouts in the frame and the front fork are performed insulation treatment; the top tube, the down tube, two seat stays and two chain stays at right and left side and two tubes of the front fork must be made of same material; materials whose melting points are close could not be used in one frame or front fork in order to avoid materials with different heat temperature to interfere with each other during heating; the stress influence coming from galvanic corrosion between different metal materials and different linear expansion coefficients is negligible by complying with above principle.

Preferably, the said optimized connection structure in bicycle frame, wherein comprises: a top tube, a down tube, a seat tube, a seat stay, a chain stay and a head tube which connects the top tube and the down tube, a seat tube lug connecting the seat tube, the top tube and the seat stay, a bottom bracket connecting the seat tube, the down tube and the chain stay, a double-insert for dropout connecting the seat stay and the chain stay and the dropout connector, and the head tube, the seat tube lug, the bracket, the dropout lug and the double-insert for dropout are made of magnesium, and the top tube, the down tube, the seat tube, the seat stay and the chain stay are made of steel.

Preferably, the said head tube, the said seat tube lug, the said bracket and the said dropout lug are made of magnesium; and correspondently the said top tube, the said down tube, the said seat tube, the said seat stay, the said chain stay and the said double-insert for dropout are made of titanium.

Preferably, the said head tube, the said seat tube lug, the said bracket and the said dropout lug are made of aluminum, and correspondently the said top tube, the said down tube, the said seat tube, the said seat stay, the said chain stay and the said double-insert for dropout are made of titanium.

Preferably, the said head tube, the said seat tube lug, the said bracket, the said double-insert for dropout, the said dropout lug, the said seat tube, the said seat stay and the said chain stay are made of magnesium, and correspondently the said top tube and the said down tube are made of titanium.

Preferably, the said optimized connection structure wherein comprises: a fork stem, a front fork, an insert for front dropout, a crown lug connecting the stem and the front fork, a front dropout lug and a double-insert for crown connecting the front fork and an insert for front dropout, and the double-insert for crown, the crown lug, the front dropout lug, the insert for front dropout are made of aluminum, and correspondently the front fork and the stem are made of steel.

Preferably, the said double-insert for crown, the said crown lug, the said front dropout lug, the said insert for front dropout are made of aluminum, and correspondently the said front fork and the said front stem are made of steel.

Preferably, the said double-insert for crown, the said crown lug, the said front dropout lug and the said insert for front dropout are made of magnesium, and correspondently the said front fork and the said front stem are made of titanium.

Preferably, the said double-insert for crown, the said crown lug, the said front dropout lug and the said double-insert for front dropout are made of aluminum, and correspondently the said from fork and the said front stem are made of titanium.

### TECHNICAL EFFECT

Comparing to existing welded bicycle frames and front forks, substantial improvements and beneficial results of this invention including the following:
I. The connection structure of bicycle frame and front fork tube with high toughness and strength is simple and only one additional multi-functional insert is needed at each tubular connection part; with each connector being formed, up to four tubes that are connected by this connector could be formed simultaneously with connection length up to 5.0∼20.0mm; the size and the structure strength of the connected metal are far beyond those of welded structure; the formed connector's structure is forged and dense with high strength and good toughness; the manufacture method, that the connection is performed inside molds by automatic control, implemented for the first time substantially decreases machining steps to form frames and front forks, saves a large number of labors and plate area and standardizes product quality.
II. The machining time is shortened, and the connection parts of frames and front forks could be heated evenly; the connection appearance rivals carbon fiber connection with highly precise location and dimension.
III. The machining of a bicycle frame and front fork parts is divided into multiple steps by using multiple molds, and the connectors are formed with high strength and toughness directly through liquid forging process, which easily achieves good mechanical performance and easiness to update product pattern and dimension with reduced mold cost, and satisfies recent manufacture ways which requires various types and small batch for each type and reduces manufacture cost.
IV. The same manufacture equipment and mold could be used to machining frames and front forks made of various materials including magnesium, aluminum, titanium and steel which unprecedentedly enriches product types for those enterprises relying on tube material purchasing.
V. The connection structure with high toughness and strength of bicycle frames and front forks in this invention is mechanical connection connecting parts with two different materials; consequently new types of frames and front forks could be created with both safety and comfort satisfying most of the requirements in modern bicycle market.
VI. This invention is particularly suitable for manufacturing steel and titanium frames and front forks with super high toughness and strength and with tubular wall as thin as 0.3∼0.8mm, in the meantime the cost is lower comparing to weld process. The frames and front forks made of titanium or steel with a broad market prospect could be well promoted and spread therefore.

### BRIEF DESCRIPTION OF THE DRAWINGS

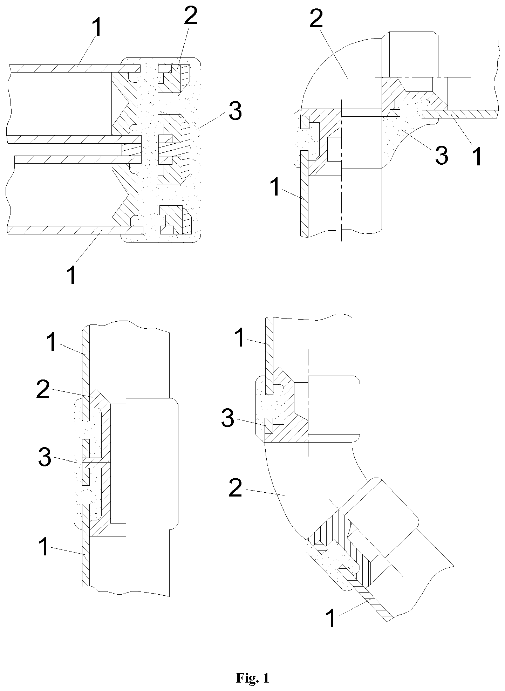

FIG.1 shows a typical casting and forging compound connection of a metal tube.
FIG.2 shows a casting and forging compound connection of each part of a bicycle frame.
FIG.3 shows the structure of a T type connection insert for circular tube in a bicycle frame or a front fork of this invention.
FIG.4 shows the structure of an angle connection insert for circular tube in a bicycle frame of this invention.
FIG.5 shows the structure of an angle connection insert for a flat tube in a bicycle frame of this invention.

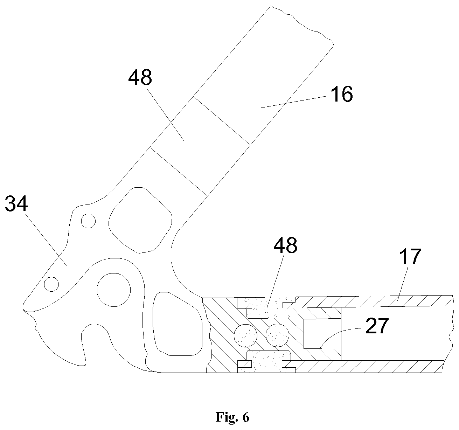

FIG.6 shows a connection structure for a double insert for dropouts in a bicycle of this invention.
FIG.7 shows a casting and forging compound connection of each part of a bicycle front fork of this invention.
FIG.8 shows the structure of a circular double insert for front fork crown in a bicycle of this invention.
FIG.9 shows the structure of a flat double insert for front fork crown in a bicycle of this invention.

Among the above drawings: 1.metal tube, 2.multi-functional insert, 3.connector, 10.top tube, 11.inner hole of tube, 12.transverse section of tube, 13.radical through hole of tube, 14.down tube, 15.seat tube, 16.seat stays, 17.chain stays, 18.counterbored outer circle of seat tube, 19.radical through hole of seat tube, 20.T shape insert for circular tube, 21.block, 22.small shoulder for positioning, 23.ring groove for circular insert, 24.big shoulder for positioning, 25.axial through hole for insert, 26.intersecting circular surface, 27.lightening hole in insert, 28.circular angle insert, 29.flat angle insert, 30.block thickness of flat insert, 31.connection part thickness of flat insert, 32.connecting through hole of flat insert, 34.double insert for dropouts, 35.positioning groove in seat tube, 36.connected through hole in double insert, 37.circular double insert for crown, 38.flat double insert for crown, 39.insert for front dropout, 40.head tube, 41.outer ring, 42.inner ring, 43.radical connecting bar, 44.axial connecting bar, 45.external surface of connecting convex, 46.inner hole of head tube, 48.dropout lug, 49.bracket, 50.seat tube lug, 51.through hole fitting top tube, 52.through hole fitting seat stays, 58.crown lug, 59.front dropout lug, 60.front stem, 61.front fork, 62.radial through hole in front fork.

### DETAILED DESCRIPTION OF THE PREFERRED EMBODIMENTS

The embodiments are described in more details below in order to explain this invention with the solution as premise. This invention is not to be limited in scope by the embodiments disclosed herein, and any that are functionally equivalent are within the scope of the invention.

### The First Embodiment

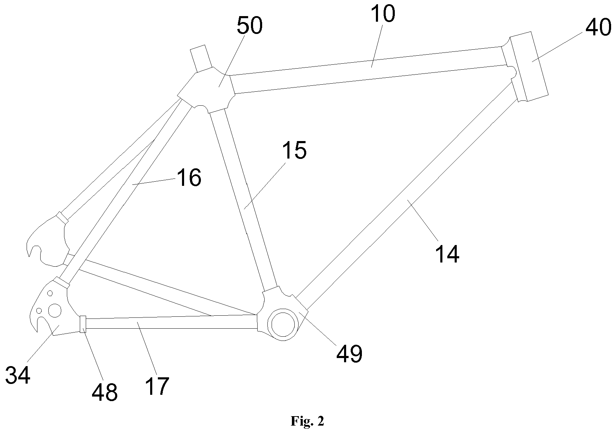

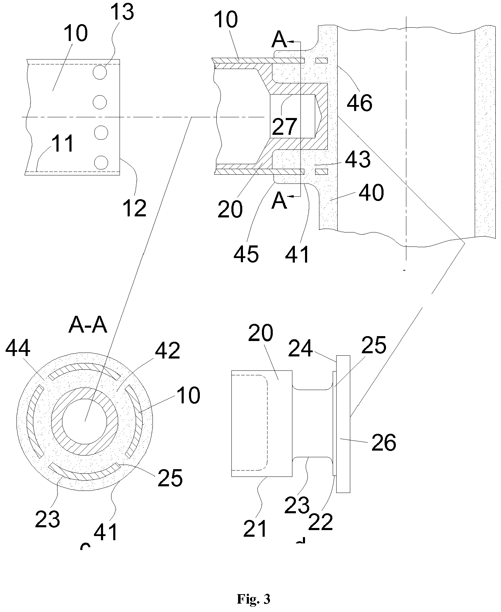

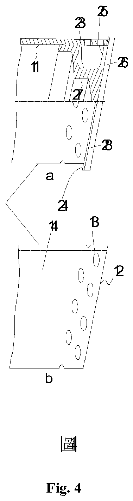

Referring to FIG.2, FIG.3 and FIG.4, the first embodiment is composed of connection with high toughness and strength among frame head tube 40, top tube 10 and down tube 14 as well as the tube material combination:
1.1) Top tub 10 and down tube 14 are made of Ti3Al2.5V titanium seamless circular tube with wall thickness as 0.8mm, inner hole diameter as 30.0mm; 6 through holes around connection part of top tube 10 and down tube 14 are formed using mechanical or laser with Ø=7.0mm; head tube 40 is formed by casting and forging combo-machine with AZ80A-T4 /T6 magnesium ingot while insert 20 and 28 are formed by lathe with AZ80A-T4/T6 magnesium bar.
1.2) Chamfering, chip removing, dressing and drying the tubes and t insert;
1.3) Performing micro-arc oxidation insulation on insert surface.
1.4) Stuffing insert 20 and insert 28 into joint end of the top tube 10 and down tube 14.
1.5) Putting top tube 10 and down tube 14 on the corresponding location of bottom die of head tube 40 in the casting and forging combo-machine, keeping temperature of the casting and forging mold at 200∼230°C, securing together and closing the molds together by coordinating the PLC controlling, then injecting molten magnesium keeping at 680∼730°C through channel into the mold barrel of head tube 40 to perform molding filling with liquid lamellar flowing with the cavity in head tube 40: the molten magnesium flow radical through hole 13 of top tube 10 and down tube 14 and axial through hole 25 of insert and enter the ring groove 23 in insert and fill all the cavities; after a while when molten magnesium temperature is cooled down to 570∼585°C, the combo-machine automatically controlled by PLC performs press forging on head tube 40 and keeps specific press as 60∼85MPa till it finally forms the connection parts. Now head tube 40 forms an inner magnesium ring 42 and an outer ring 41 which are connected by a radical magnesium bar 43 and an axial magnesium bar 44. The rings together with connection part connecting insert 20, top tube 10 and down tube 14 are finally forged and formed into one single, three dimensional structures with high toughness and strength.

### The Second Embodiment

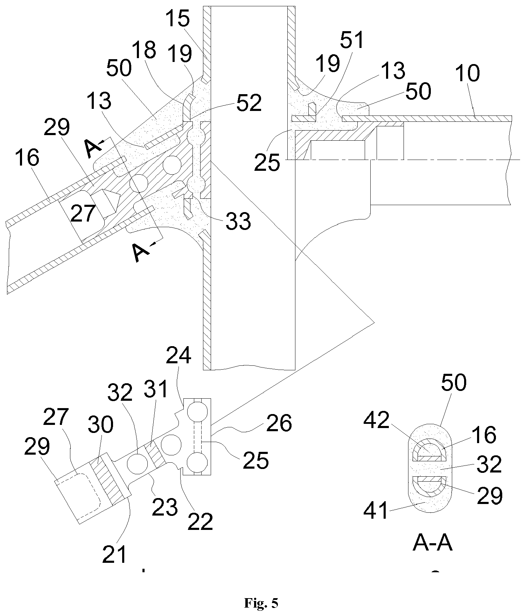

Referring to FIG.2, FIG.3 and FIG.5, the second embodiment is composed of connection with high toughness and strength among frame seat tube 50, top tube 10 and seat stay 16 as well as the tube material combination.
2.1) The inner hole at the end of seat tube 15 connection part is locally counterbored with axial length=50.0mm, increased wall thickness=1.00mm and increased radical diameter=8.0mm. The through holes 51 and 52 fitting top tube 10 and seat stay 16 respectively are formed in the intermediate connection part of top tube 10 and seat stay 16. The width of seat stay 16 inner hole is 12.1mm. The thickness 30 of block at end of the flat angle insert 29 is 12.0mm. The clearance when sliding fit the seat stay and the angle insert is 0.1mm while the thickness at middle and top is 7.0mm. Except for top tube 10 made of Ti3AL2.5V seamless titanium tube, seat tube 15, seat stay 16 and all the inserts are made of 7050-T4/T6 titanium seamless tube and bar.
2.2) Chamfering, chip removing, dressing and drying the tubes and t insert.
2.3) Performing micro-arc oxidation insulation on surface of seat tube 15, two seat stays and inserts.
2.4) Stuffing insert 20 and two flat inserts 29 into inner hole of joint end of the top tube 10 and seat tube 16.
2.5) Putting the counterbored seat tube 15, top tube 10 stuffed with circular T shape insert 20 and seat stay 16 stuffed with flat angle insert 29 on the corresponding location of bottom die of seat tube 50 respectively in the casting and forging combo-machine, keeping temperature of the casting and forging mold at 200∼250°C, securing together and closing the molds together by coordinating the PLC controlling, then injecting molten aluminum keeping at 690∼720°C through channel into the mold barrel of seat tube 50 to perform molding filling with liquid lamellar flowing with the cavity in seat tube 50: the molten aluminum flow radical through hole 13 of top tube 10 and seat stay 16 and axial through holes 25 and 23 of circular T shape insert 20 and flat angle insert 29 and fill all the cavities at left and right side of seat tube; after a while when molten aluminum temperature is cooled down to 580∼595°C, the combo-machine automatically controlled by PLC performs press forging on seat tube 50 and keeps specific press as 85∼110MPa till it finally forms the connection parts. Now seat tube 50 forms an inner aluminum ring 42 and an outer ring 41 which are connected by a radical aluminum bar 43 and an axial aluminum bar 44. The rings together with connection part connecting top tube 10, top tube insert 20, two seat stays 16 and two flat angle inserts 29 are finally forged and formed into one single, three dimensional structures with high toughness and strength.

### The Third Embodiment

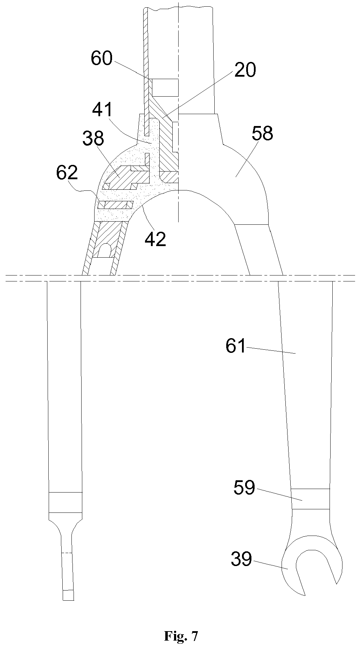

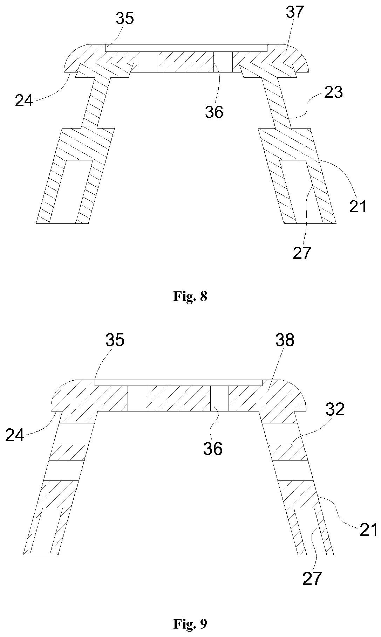

Referring to FIG.7 and FIG.9, the third embodiment is composed of connection with high toughness and strength among crown lug 58, front stem 60 and two seat stays 62 at right and left side as well as the tube material combination.
3.1) Two seat stays are made of Ti3AL2.5V seamless titanium tube, stem 60, insert 20, double insert for crown 38 and crown lug 58 are made of 7050-T4/T6 titanium seamless tube, bar and ingot.
3.2) Chamfering, chip removing, dressing and drying the tubes and t insert.
3.3) Performing micro-arc oxidation insulation on surface of insert and tube.
3.4) Stuffing insert 20 into inner hole of joint end of the stem 60 then putting it into positioning groove in seat tube 35 of double insert for crown 38, aligning axial through 25 in the insert with through hole 36 in double insert for crown 38, spot welding symmetrically at joint part between insert 20 and double insert for crown 38 for following connection.
3.5) Stuffing the left and right blocks, which are spot welded on stem 60 and double insert for crown 38, into the two front forks at right and left side, which are connected with dropout insert; putting this part on the corresponding location of bottom die of crown lug 58 in the casting and forging combo-machine, keeping temperature of the casting and forging mold at 200∼250°C, securing together and closing the molds together by coordinating the PLC controlling, then injecting molten aluminum keeping at 690∼720°C through channel into the mold barrel of crown lug 58 to perform molding filling with liquid lamellar flowing with the cavity in crown lug 58: the molten aluminum flows the radical through hole 13 in stem 60, the axial through hole 25 in insert 20, the radical through hole 62 in the left and right front forks 61, and horizontal through hole 32 in double insert for crown 38 and fill all the cavities inside crown lug 58; after a while when molten aluminum temperature is cooled down to 580∼595°C, the combo-machine automatically controlled by PLC performs press forging on the crown lug 58 and keeps specific press as 85∼110MPa till it finally forms the connection parts. Now the crown lug 58 forms an inner aluminum ring 42 and an outer ring 41 which are connected by a radical aluminum bar 43 and an axial aluminum bar 44. The rings together with connection part connecting stem 60, seat tube insert 20, two seat stays 61 and double insert for crown 58 are finally forged and formed into one single, three dimensional structures with high toughness and strength.

## Claims

1. An optimized connection structure of metal tubes wherein the structure comprising:
tubes, a multi-functional insert positioned in the inner end of a tube and a tube connector, in which one of the tubes contains radical through holes around the joint part and the center lines of the through holes are parallel to the tube's transverse section; the said multi-functional insert comprising: a block positioned at the end, a groove or a through hole in the middle and small and big shoulders at the top, wherein the big shoulder comprising: an axial hole or a through channel located at the external surface which connects the said groove or through hole, and a circular surface intersects with the inner side of the tube connector; the tube connector comprising: an inner metal ring, an outer metal ring, and several radical and axial metal bars connecting the rings which cover the tubes and the multi-functional insert and formed into a single, three dimensional structure with high toughness and strength during the forging process.

2. The optimized connection structure as claimed in claim 1, wherein the tube is selected from a group consisting of a top tube, a down tube, a seat tube, a seat stay, a chain stay and a front tube of bicycle frame, and a front fork of bicycle; the tube connector is positioned at the end of the connection part of the seat tube which connects the top tube and the two seat stays with the seat tube, and the connection part comprising: an inner hole and a through hole, which are locally counterbored along axial direction and diameter direction in order to fit the top tube and the seat stays during the seat tube forming process.

3. The optimized connection structure as claimed in claim 2, wherein the said multi-functional insert is selected from a group consisting of a two-port insert for top tube, a two-port insert for down tube, an insert for the seat tube, an insert for the seat stay, an insert for the chain stay, a double-insert for a dropout, a double-insert for a fork crown or an insert for a front dropout, and the multi-functional insert is a shape of circular, flat or irregular structure, wherein the small shoulder at the top and the block positioned at the end of the insert are of the same transverse shape and dimension, which could sliding fit within the inner side of the said tube, and the insert is a shape of flat structure, and the radical section thickness of the middle and top of the insert are less than that of the block at the insert end.

4. The optimized connection structure as claimed in claim 3, wherein the double-insert for the dropout is of an integrated structure with the insert being of circular or flat.

5. The optimized connection structure as claimed in claim 3, wherein the double-insert for the fork crown is of an integrated structure with the insert being of circular, flat or irregular, and a circular groove is positioned on the double-insert to fix the stem, and a through hole is positioned on the double-insert connecting the insert groove of stem and the crown lug.

6. The optimized connection structure as claimed in claim 2, the tube is selected from a group consisting of a head tube, a seat tube lug, a bottom bracket, a dropout lug, a front dropout lug and a crown lug; and the tube connector is formed by die forging and die casting, and the tubes and the multi-functional insert inside tubes, as inlaid parts, help secure and form connection parts to achieve connection with high strength by being pre-positioned in corresponding location in the forging and casting die.

7. The optimized connection structure as claimed in claim 2, the seat tube, the seat stay, the chain stay and the head tube connects the top tube and the down tube, the seat tube lug connecting the seat tube, the top tube and the seat stay, a bottom bracket connecting the seat tube, the down tube and the chain stay, the double-insert for dropout connecting the seat stay and the chain stay and the dropout connector, and the head tube, the seat tube lug, the bracket, the dropout lug and the double-insert for dropout are made of aluminum, and the top tube, the down tube, the seat tube, wherein the seat stay and the chain stay are made of steel.

8. The optimized connection structure as claimed in claim 7, wherein the head tube, the seat tube lug, the bracket and the dropout lug are made of magnesium while the top tube, the down tube, the seat tube, the seat stay, the chain stay and the double-insert for dropout are made of titanium, or the said head tube, the said seat tube lug; the bracket and the dropout lug are made of aluminum while the top tube, the down tube, the seat tube, the seat stay, the chain stay and the double-insert for dropout are made of titanium; or the head tube, the seat tube lug, the bracket, the double-insert for dropout, the dropout lug, the seat tube, the seat stay and the chain stay are made of magnesium while the top tube and the down tube are made of titanium.

9. The optimized connection structure as claimed in claim 2, the tube is selected from a group consisting of a fork stem, a front fork, an insert for front dropout, a crown lug connecting the stem and the front fork, a front dropout lug and a double-insert for crown connecting the front fork and an insert for front dropout; the double-insert for crown, the crown lug, the front dropout lug, the insert for front dropout are made of aluminum while the front fork and the stem are made of steel.

10. The optimized connection structure as claimed in claim 9, wherein the double-insert for crown, the crown lug, the front dropout lug, the insert for front dropout are made of aluminum while the front fork and the front stem are made of steel; or the double-insert for crown, the crown lug, the front dropout lug and the insert for front dropout are made of magnesium while the front fork and the front stem are made of titanium; or the double-insert for crown, the crown lug, the front dropout lug and the double-insert for front dropout are made of aluminum while the from fork and the front stem are made of titanium.

11. An optimized method of connecting metal tube wherein comprising:
1) machining an end face, through a hole or through a groove of metal or nonmetal tubes;
2) CNC machining a multi-functional insert;
3) chamfering, chip removing, dressing and drying tubes and the multi-functional insert, and performing micro-arc oxidation surface insulation surface when two different metal materials are connected;
4) stuffing the multi-functional insert that matches with the tube into joint end of the tube;
5) putting one or multiple tubes stuffed with multi-functional insert on the corresponding location of bottom die in the casting and forging combo-machine, securing together and closing the molds together by coordinating the PLC controlling, holding temperature of stock oven and mold heating and cooling system, then injecting molding filling with liquid lamellar flowing into the mold to fill the cavity inside the connector, the tubes and the multi-functional insert, and the combo-machine automatically controlled by PLC performing press forging which and keeps the force till it finally forms the connection parts after the temperature of the metal is cooled to semi-solid temperature, when one connection part forms an inner metal ring and an outer metal ring which are connected by numerous small radical or axial metal bars, and the rings and bars together with the forged and casted tubes and the multi-functional insert are finally forged and formed into one single, three dimensional structures with high toughness and strength.

12. A method for using the optimized connection structure of metal tube fitting claimed in any of the claims 1 to 11 wherein connecting frame and front fork of bicycles, electric bikes with or without pedals, electric or pneumatic motorcycles and electric cars.
